# EUROPEAN PATENT SPECIFICATION

(11) **EP 1 509 748 B1**
(45) Date of publication and mention of the grant of the patent: **16.04.2008**
(21) Application number: 03720785.9
(22) Date of filing: 08.05.2003
(51) Int. Cl.: G01C 19/20

(54) **A METHOD OF DISCHARGING SPHERICAL ELEMENTS FROM A CONTAINER AND A DISPENSING APPARATUS**
VERFAHREN ZUM ENTLADEN SPHÄRISCHER ELEMENTE AUS EINEM BEHÄLTER UND AUSGABEVORRICHTUNG
PROCEDE PERMETTANT DE DECHARGER DES ELEMENTS SPHERIQUES D'UN RECIPIENT ET APPAREIL DE DISTRIBUTION

(30) Priority: 13.05.2002 ZA 200203792
(43) Date of publication of application: 02.03.2005
(73) Proprietor: Pebble Bed Modular Reactor (Proprietary) Limited, 0046 Centurion (ZA)
(72) Inventor: Curtolo, Frank, 7600 Stellenbosch (ZA); Eksteen, Nicolaas Cornelius, 0154 Centurion (ZA)
(74) Representative: Legg, Cyrus James Grahame
(86) International application number: PCT/IB2003/001797
(87) International publication number: WO 2003/096030

(56) References cited:
- DE-A1- 3 711 974
- DE-C1- 19 815 931

## Description

THE INVENTION relates to a method of controlling the movement of spherical elements and to apparatus for regulating the movement of spherical elements.

The Inventors are aware of situations where it is desirable to control the movement of elements from one location to another.

One such situation is in a nuclear power plant making use of a high temperature gas cooled reactor of the pebble bed type. Pebble bed reactors make use of spherical fuel elements and spherical moderator elements and it is extremely important that the movement of the spherical elements through the reactor and around the plant be carefully controlled.

In DE-A-3711974, a method and device for loading and unloading containers containing spherical fuel elements is disclosed. The container is filled with irradiated, spherical fuel elements. A primary lid is screwed onto the lower end and sealed by means of seals. On top of that, a connection head having a seal is screwed onto the container. A rotating perforated disc conveys the spheres into a channel leading from the container. From there the spheres roll through the channel and through a diverter into a connecting piece, which is joined to a flexible bellows, to a sphere transport system known per se. The perforated disc mounted in the primary lid is positively connected to a geared motor by way of a push-in coupling when the connection head is mounted.

According to one aspect of the invention there is provided a method of controlling the movement of spherical elements which includes the steps of
feeding the spherical elements into a downwardly directed feed path; and
rotating a feed head in the feed path to regulate the movement of the spherical elements through a feed passage which leads from the feed path, characterised in that the method also includes the step of regulating, with a regulating means, the rate at which the spherical elements enter the feed passage.

The method may include feeding the spherical elements from a container in which the elements are contained into the feed path. Hence the method may be particularly well suited to the dispensing of spherical elements from a container containing the elements.

The method includes regulating the rate at which the spherical elements enter the feed passage.

Regulating the rate at which spherical elements enter the feed passage may include permitting the spherical elements to enter the feed passage only at one or more predetermined positions of the head.

According to another aspect of the invention there is provided regulating apparatus for regulating the movement of spherical elements from one location to another, which apparatus includes
a feed path defining means defining a downwardly extending feed path within which spherical elements are receivable;
at least one feed passage leading from the feed path; and
a feed head mounted for rotation in the feed path to regulate the flow of spherical elements from the feed path into the feed passage; characterised in that the apparatus also comprises regulating means for regulating the rate of which spherical elements pass through the feed passage.

The invention may find application particularly in the dispensing of spherical elements from a container containing the elements the feed path then typically extends downwardly from an outlet of the container containing the spherical elements.

The feed passage may be dimensioned to permit the passage of spherical elements in single file therethrough.

In one embodiment of the invention the feed passage may have an upper end which opens upwardly out of the feed head.

The feed head may have an upper surface which is inclined so as to feed the spherical elements in the feed path towards the upper end of the feed passage. In a preferred embodiment of the invention, the upper surface of the feed head may taper upwardly inwardly from a radially outer edge thereof, the upper end of the passage opening out of the feed head at a radially outer edge region thereof.

It will be appreciated that with the arrangement described above, the spherical elements can enter and pass through the feed passage one at a time providing a degree of control of the discharge of the elements from the container. However, it may be desirable to regulate the rate at which the spherical elements are discharged more closely.

To this end, the regulating apparatus includes regulating means for regulating the rate at which spherical elements pass through the feed passage. This may be achieved by regulating the rate at which the spherical elements enter the feed passage.

Hence, the method may include permitting the spherical elements to enter the feed passage only at one or more predetermined positions of the feed head. In this way the number of spheres entering the feed passage per revolution of the feed head can be closely controlled.

The regulating means may include a discontinuous barrier which covers the upper end of the feed passage and inhibits the entry of spheres into the feed passage for part of the rotation of the feed head.

The barrier may be formed by a circumferential shoulder which is positioned adjacent the upper surface of the radially outer edge region of the feed head, the shoulder having at least one radially inwardly and downwardly open recess within which recess a spherical element is receivable. Hence under the influence of gravity a spherical element will enter the recess. As the feed head rotates, each time the upper end of the feed passage comes into register with the recess a spherical element will enter the passage. Preferably, a plurality of circumferentially spaced recesses is provided in the shoulder. Hence, the number of spherical elements being discharged per revolution of the feed head will correspond to the number of recesses.

In another embodiment of the invention the feed passage has an upper end which opens upwardly into the feed path, a lower end which is angularly offset from the upper end and an intermediate portion extending between the upper and lower ends.

The intermediate portion may extend circumferentially adjacent to a radially outer surface of the feed head for at least part of its length. Hence, the lower end may be angularly offset from the upper end in the direction of rotation of the feed head.

A plurality of circumferentially spaced feed passages may be provided.

The invention extends to a nuclear power plant which includes a spherical element handling system including at least one regulating apparatus of the type described above.

The invention will now be described, by way of example, with reference to the accompanying diagrammatic drawings.

In the drawings:
Figure 1 shows a schematic sectional elevation of a regulating apparatus, which is not part of the claimed invention.
Figure 2 shows a schematic sectional elevation, similar to Figure 1, of a regulating apparatus in accordance with the invention;
Figure 3 shows a side elevation taken at III-III in Figure 2;
Figure 4 shows a schematic sectional elevation, similar to Figures 1 and 2, of another regulating apparatus in accordance with the invention;
Figure 5 shows a sectional elevation of the apparatus of Figure 4 taken at 90° relative to the elevation of Figure 4;
Figure 6 shows a plan view of the apparatus of Figures 4 and 5;
Figure 7 shows a three-dimensional fragmentary view of the apparatus of Figures 4 to 6; and
Figure 8 shows a plan view, similar to Figure 6, of yet another regulating apparatus in accordance with the invention.

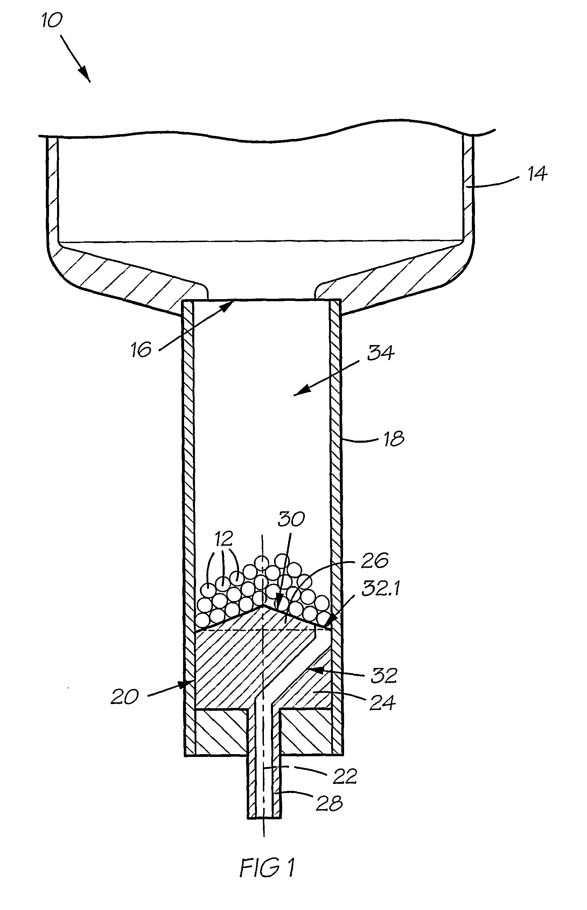

In Figure 1 of the drawings, reference numeral 10 refers generally to a basic regulating apparatus which is not part of the claimed invention.

The regulating apparatus 10 is intended for dispensing spherical elements 12, particularly fuel spheres and/or moderator spheres from a container 14 in which the spherical elements 12 are contained. The container 14 includes a downwardly directed outlet 16 which opens out of a bottom of the container 14. The bottom of the container 14 is inclined downwardly towards the outlet 16 so as to feed the spherical elements 12 contained therein towards the outlet 16.

The regulating apparatus 10 includes a cylindrical tubular member 18 extending downwardly from the outlet 16 of the container 14. A feed head 20 is mounted in the cylindrical tubular member 18 such that it is rotatable relative thereto about an axis of rotation 22. The feed head 20 is dimensioned such that the clearance between the feed head 20 and the inner surface of the tubular member 18 is too small to permit a spherical element 12 to enter therebetween.

The feed head 20 comprises a circular cylindrical centre portion 24, a generally conical upper portion 26 and a tubular stem 28, the upper portion 26 and stem 28 being provided on opposite sides of the centre portion 24. The stem 28 typically functions as a drive shaft.

The upper portion 26 has an upper surface or crown 30 which slopes downwardly outwardly from the centre thereof towards the radially outer edge thereof.

A feed passage 32 extends downwardly through the feed head 20. More particularly, the feed passage 32 has an upper end 32.1 which opens upwardly out of the crown 30 in a radially outer edge portion thereof. Initially, the feed passage 32 extends vertically downwardly from its upper end 32.1 whereafter it extends downwardly and radially inwardly towards the centre of the feed head 20 and then downwardly through the stem or drive shaft 28. A drive mechanism (not shown) will typically be drivingly connected to the drive shaft 28 whereby the shaft and hence the feed head 20 is rotatable about the axis 22.

In the embodiment described above, the tubular member 18 defines a feed path 34.

In use, the spherical elements 12 are fed under the influence of gravity through the outlet 16 and down the feed path 34 where they accumulate on top of the feed head 20. In addition, by virtue of the inclination of the crown 30, the spherical elements 12 are urged radially outwardly and downwardly. As the feed head 20 rotates about the axis 22, the spherical elements will be arranged in a circular row of spherical elements along the radially outer edge portion of the crown 30. As the spherical elements 12 line up with the upper end 32.1 of the feed passage 32 they fall downwardly into the feed passage, under the influence of gravity. In this way, the discharge of the spherical elements can be controlled. However, the possibility does exist that strings of spherical elements may be discharged and it may be desirable to control the rate at which the spherical elements are discharged more closely.

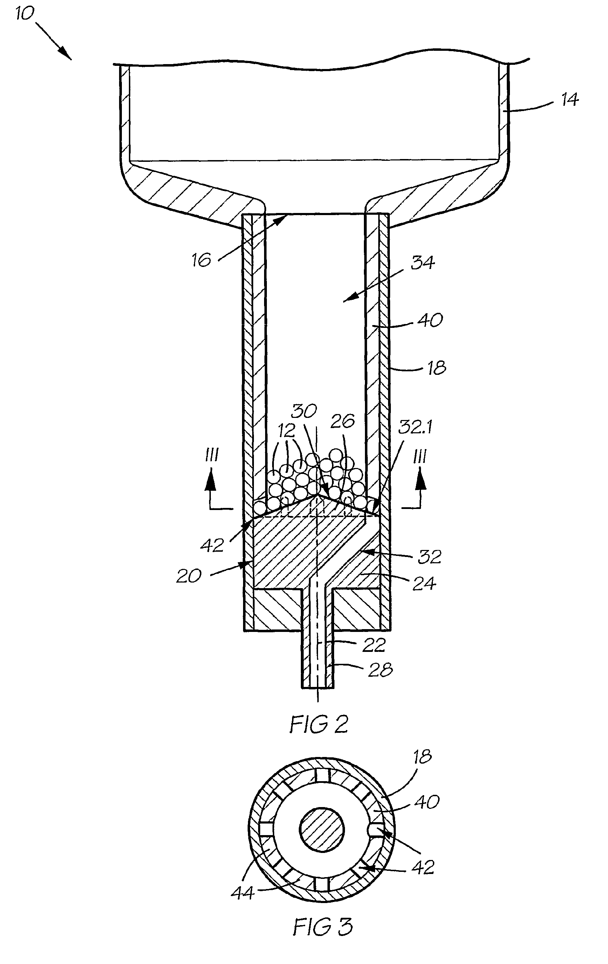

Hence, in the embodiment of the invention, shown in Figures 2 and 3 of the drawings, in which unless otherwise indicated, the same reference numerals are used to designate similar parts, a tubular insert 40 is positioned within the member 18.

Typically, the wall thickness of the insert 40 will be slightly larger than the diameter of a spherical element 12. A plurality of inwardly and downwardly opening recesses 42 is provided in a lower edge of the insert 40, the recesses 42 being separated by circumferentially extending lands 44. Each recess 42 will typically be dimensioned such that a single spherical element 12 is receivable therein.

Hence, in use, in this embodiment of the invention, the spherical elements 12 will be urged under the influence of gravity downwardly so that a spherical element 12 will enter each of the recesses 42. When the upper end 32.1 of the feed passage 32 is in register with one of the lands 44 then the feed path 34 is essentially blocked off inhibiting the entry of a spherical element therein. However, when the upper end 32.1 comes into register with one of the recesses 42, the spherical element positioned in the recess falls into the feed path 34 and can be discharged at a desired location in the usual manner. In this way, the number of spherical elements discharged per revolution of the feed head 20 can be closely controlled.

Naturally, dimensions of the components of the regulating apparatus could vary. However, the Inventors believe that the feed path 34 will typically have an internal diameter which is at least six times the diameter of the spherical elements with which the regulating apparatus is intended for use.

The Inventors believe that regulating apparatus in accordance with the invention will permit a controlled discharge of spherical elements. In addition, the Inventors believe that the apparatus will inhibit the formation of blockages as a result of bridge building. Further, the apparatus will permit the unloading of spheres to be interrupted, eg by stopping the feed head in a position in which the upper end 32.1 of the feed passage 32 is in register with one of the lands 44. The apparatus will also permit the discharge of spherical elements in a manner which reduces the risk of damage to the spherical elements. In addition, by virtue of the relative simplicity of the apparatus, the Inventors believe that it will be reliable in operation.

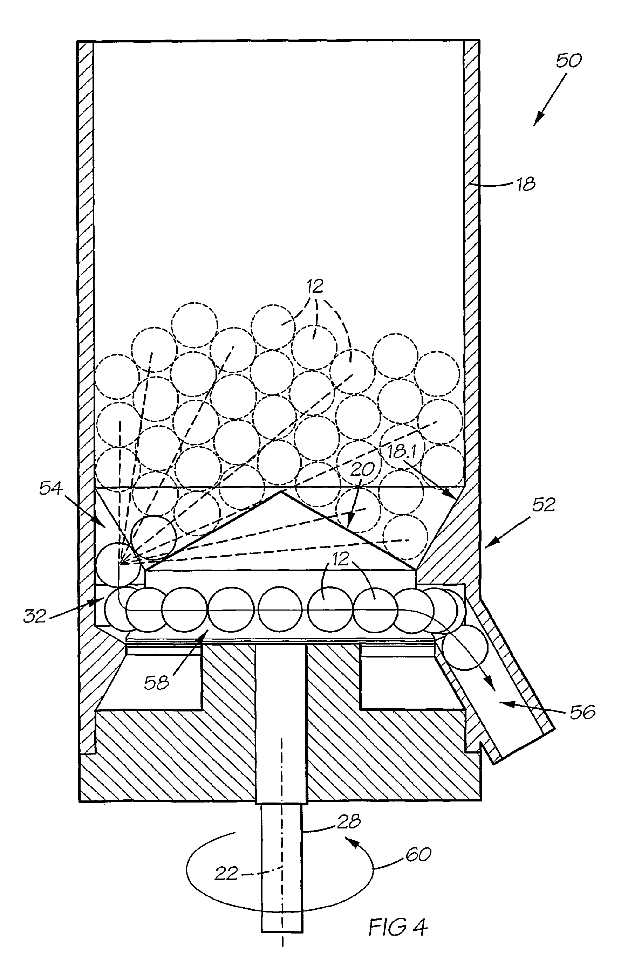

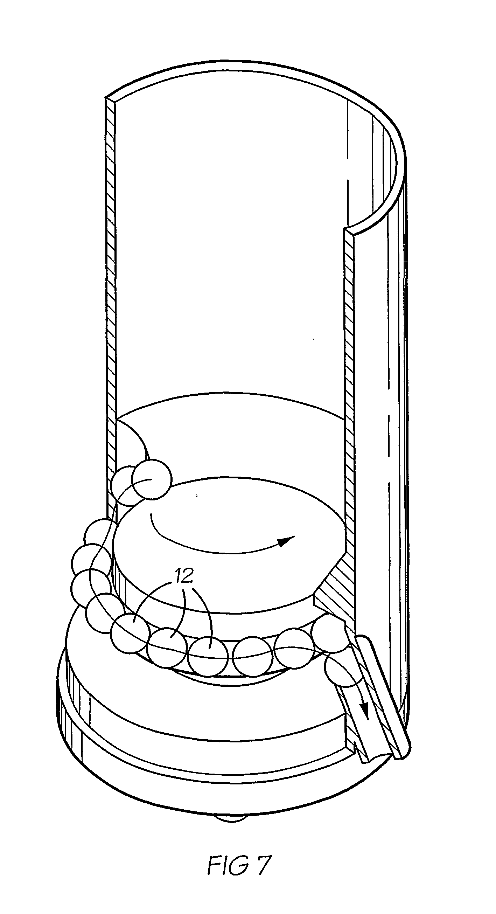

Reference is now made to Figures 4 to 7 of the drawings, in which reference numeral 50 refers generally to part of another regulating apparatus in accordance with the invention and, unless otherwise indicated, the same reference numerals used above are used to designate similar parts

In this embodiment of the invention, the feed passage 32 does not extend through the drive shaft 28. Accordingly, the drive shaft need not necessarily be hollow although this possibility is not excluded.

Further, the tubular member 18 has a portion of generally increased wall thickness, generally indicated by reference numeral 52. The wall thickness increases downwardly such that a portion 18.1 of a radially inner surface of the tubular member 18 tapers inwardly downwardly.

The feed passage 32 has an upper end 54 which opens upwardly out of the surface 18.1. The feed passage 32 further has a lower end 56 which is inclined downwardly and spaced angularly from the upper end 54 and an intermediate portion 58 extending between the upper end portion 54 and the lower end portion 56. The upper end portion 54 and intermediate portion 58 are defined by a recess in the tubular member 18 and a surface of the feed head 20.

The dimensions of the feed passage 34 are selected such that the spherical elements 12 can enter and pass along the feed passage 32 one at a time.

In use, the feed head 20 is rotated in the direction of arrow 60. This serves to agitate the spherical elements 12 within the tubular member 18 so that they become aligned with and enter the upper end 54 of the feed passage 32. The spherical elements move downwardly, under the influence of gravity, into the intermediate portion 58 of the feed passage 32 and are transported therealong as a result of the rotation of the head 20. The spherical elements 12 then come into register with the lower end 56 of the feed passage 32 and are discharged, under the influence of gravity, therethrough.

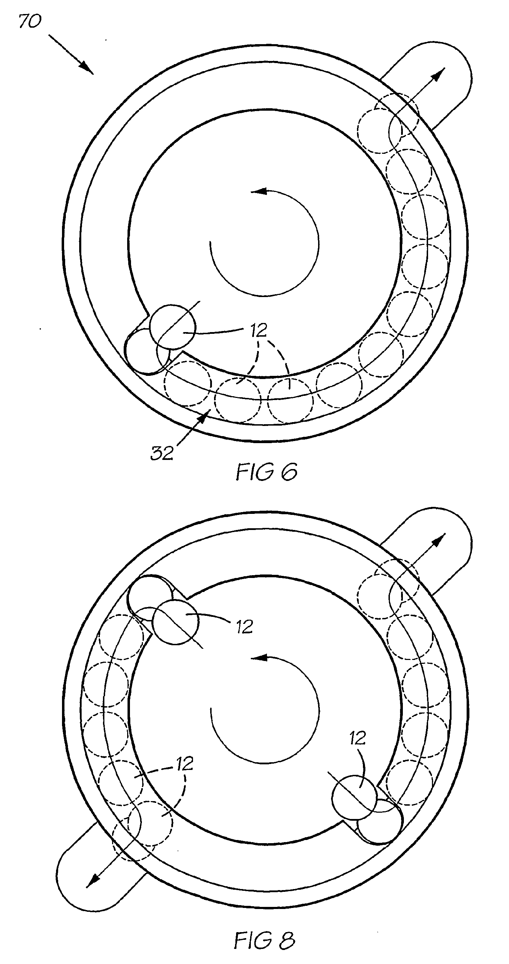

Reference is now made to Figure 8 of the drawings, in which reference numeral 70 refers generally to part of yet another regulating apparatus in accordance with the invention and, unless otherwise indicated, the same reference numerals used above, are used to designate similar parts.

The main difference between the apparatus 70 and the apparatus 50 is that, whereas in the apparatus 50 a single feed passage 32 is provided, in case of the apparatus 70, two angularly spaced feed passages 32 are provided. Naturally, any number of feed passages could be provided.

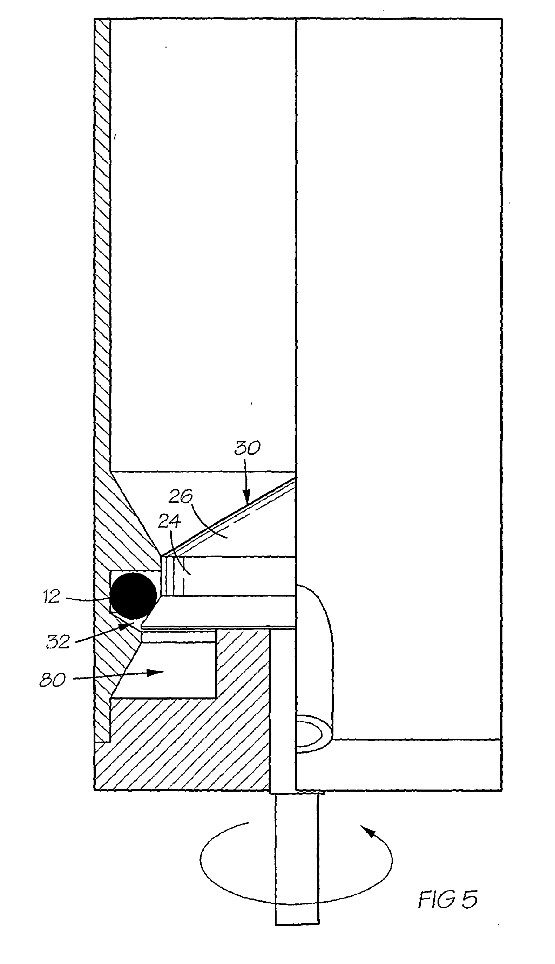

A cavity 80 (Figure 5) is provided below the feed head 20 within which dust and wear products are receivable without influencing the operation of the apparatus.

The Inventors believe that by not routing the feed passage through the drive shaft 28, the drive arrangement can be simplified. This further leads to a reduction in the radiation hazard to maintenance and operating personnel. The Inventors further believe that the apparatus shown in Figures 4 to 8 of the drawings will further reduce the risk of damage to the spherical elements.

## Claims

1. A method of controlling the movement of spherical elements (12) it including the steps of
feeding the spherical elements (12) into a downwardly directed feed path (34) and
rotating a feed head (20) in the feed path (34) to regulate the movement of the spherical elements (12) through a feed passage (32) which leads from the feed path (34) **characterised in that** the method also includes the step of regulating with a regulating means (40,42,44) the rate at which the spherical elements (12) enter the feed passage (32).

2. A method as claimed in claim 1, **characterised in that** it includes feeding the spherical elements (12) from a container (14) in which the elements are contained into the feed path (34).

3. A method as claimed in claim 1 or claim 2, **characterised in that** regulating the rate at which spherical elements (12) enter the feed passage (32) includes permitting the spherical elements (12) to enter the feed passage (32) only at one or more predetermined positions of the feed head (20).

4. Regulating apparatus (10) for regulating the movement of spherical elements (12) from one location to another, wherein the apparatus (10) includes
a feed path defining means defining a downwardly extending feed path (34) within which spherical elements (12) are receivable;
at least one feed passage (32) leading from the feed path (34);
a feed head (20) mounted for rotation in the feed path (34) to regulate the flow of spherical elements (12) from the feed path (34) into the feed passage (32) **characterised in that** the apparatus (10) also includes
regulating means (40, 42, 44) for regulating the rate at which spherical elements pass through the feed passage.

5. Regulating apparatus as claimed in claim 4, **characterised in that** the feed path (34) extends downwardly from an outlet (16) of a container (14) containing the spherical elements (12).

6. Regulating apparatus as claimed in claim 4 or claim 5, **characterised in that** the feed passage (32) is dimensioned to permit the passage of spherical elements (12) in single file therethrough.

7. Regulating apparatus as claimed in any one of claims 4 to 6, inclusive, **characterised in that** the feed passage (32) has an upper end (32.1) which opens upwardly out of the feed head (20).

8. Regulating apparatus as claimed in claim 7, **characterised in that** the feed head (20) has an upper surface (30) which is inclined so as to feed the spherical elements (12) in the feed path towards the upper end of the feed passage (32).

9. Regulating apparatus as claimed in claim 8, **characterised in that** the upper surface of the feed head (20) tapers upwardly inwardly from a radially outer edge thereof, the upper end of the feed passage (32) opening out of the feed head (20) at a radially outer edge region thereof.

10. Regulating apparatus as claimed in claim 9, **characterised in that** the regulating means includes a discontinuous barrier which covers the upper end of the feed passage (32) and inhibits the entry of spherical elements (12) into the feed passage (32) for part of the rotation of the feed head (20).

11. Regulating apparatus as claimed in claim 10, **characterised in that** the barrier is formed by a circumferential shoulder which is positioned adjacent the upper surface of the radially outer edge region of the feed head (20), the shoulder having at least one radially inwardly and downwardly open recess (42) in which recess a spherical element (12) is receivable.

12. Regulating apparatus as claimed in claim 11, **characterised in that** a plurality of circumferentially spaced recesses (42) is provided in the shoulder.

13. Regulating apparatus as claimed in any one of claims 4 to 6, inclusive, **characterised in that** the feed passage (32) has an upper end (32.1) which opens upwardly into the feed path (34), a lower end (56) which is angularly offset from the upper end and an intermediate portion (58) extending between the upper and lower ends.

14. Regulating apparatus as claimed in claim 13, **characterised in that** the lower end (56) is angularly offset from the upper end in the direction of rotation of the feed head (20).

15. Regulating apparatus as claimed in claim 14, **characterised in that** the intermediate portion (58) extends circumferentially adjacent to a radially outer surface of the feed head (20) for at least part of its length.

16. Regulating apparatus as claimed in any one of claims 13 to 15, inclusive, **characterised in that** a plurality of circumferentially spaced feed passages (32) is provided.

17. A nuclear power plant which includes a spherical element handling system **characterised in that** it includes at least one regulating apparatus (10, 50, 70) as claimed in any one of claims 4 to 16, inclusive.

## Patentansprüche

1. Verfahren zum Steuern der Bewegung kugelförmiger Elemente (12), umfassend die folgenden Schritte:
Einführen der kugelförmigen Elemente (12) in eine nach unten gerichtete Zuführungsbahn (34) und
Drehen eines Zuführungskopfes (20) in der Zuführungsbahn (34) zum Steuern der Bewegung der kugelförmigen Elemente (12) durch einen Zuführungsdurchlass (32), welcher von der Zuführungsbahn (34) weg führt, **dadurch gekennzeichnet, dass** das Verfahren auch den Schritt des Regulierens der Rate mit einem Regulierungsmittel (40, 42, 44) umfasst, mit der die kugelförmigen Elemente (12) in den Zuführungsdurchlass (32) gelangen.

2. Verfahren nach Anspruch 1, **dadurch gekennzeichnet, dass** es das Einführen der kugelförmigen Elemente (12) von einem Behälter (14), in dem sich die Elemente befinden, in die Zuführungsbahn (34) umfasst.

3. Verfahren nach Anspruch 1 oder Anspruch 2, **dadurch gekennzeichnet, dass** das Regulieren der Rate, mit der kugelförmige Elemente (12) in den Zuführungsdurchlass (32) gelangen, umfasst zu ermöglichen, dass die kugelförmigen Elemente (12) nur in einer oder mehreren vorbestimmten Positionen des Zuführungskopfes (20) in den Zuführungsdurchlass (32) gelangen.

4. Regulierungsvorrichtung (10) zum Regulieren der Bewegung der kugelförmigen Elemente (12) von einem Ort zu einem anderen, wobei die Vorrichtung (10) umfasst
ein Zuführungsbahn-Begrenzungsmittel, welches eine sich nach unten erstreckende Zuführungsbahn (34) begrenzt, in welcher kugelförmige Elemente (12) aufnehmbar sind;
wenigstens einen, von der Zuführungsbahn (34) weg führenden Zuführungsdurchlass (32);
einen Zuführungskopf (20), der für die Drehung in der Zuführungsbahn (34) angebracht ist, um den Fluss kugelförmiger Elemente (12) von der Zuführungsbahn (34) in den Zuführungsdurchlass (32) zu regulieren, **dadurch gekennzeichnet, dass** die Vorrichtung (10) ferner umfasst:
ein Regulierungsmittel (40, 42, 44) zum Regulieren der Rate, mit der kugelförmige Elemente durch den Zuführungsdurchlass gelangen.

5. Regulierungsvorrichtung nach Anspruch 4, **dadurch gekennzeichnet, dass** die Zuführungsbahn (34) von einem Auslass (16) eines die kugelförmigen Elemente (12) enthaltenden Behälters (14) nach unten verläuft.

6. Regulierungsvorrichtung nach Anspruch 4 oder Anspruch 5, **dadurch gekennzeichnet, dass** der Zuführungsdurchlass (32) größenmäßig bemessen ist, um die Passage der kugelförmigen Elemente (12) in einer einzelnen Reihe dort hindurch zu erlauben.

7. Regulierungsvorrichtung nach einem der Ansprüche 4 bis einschließlich 6, **dadurch gekennzeichnet, dass** der Zuführungsdurchlass (32) ein oberes Ende (32.1) aufweist, welches sich nach oben aus dem Zuführungskopf (20) heraus öffnet.

8. Regulierungsvorrichtung nach Anspruch 7, **dadurch gekennzeichnet, dass** der Zuführungskopf (20) eine obere Fläche (30) aufweist, welche so geneigt ist, dass sie die kugelförmigen Elemente (12) in die Zuführungsbahn zu dem oberen Ende des Zuführungsdurchlasses (32) leitet.

9. Regulierungsvorrichtung nach Anspruch 8, **dadurch gekennzeichnet, dass** sich die obere Fläche des Zuführungskopfes (20) von einem radial äußeren Rand daran nach oben innen verjüngt, wobei sich das obere Ende des Zuführungsdurchlasses (32) an einem radial äußeren Randbereich daran aus dem Zuführungskopf (20) heraus öffnet.

10. Regulierungsvorrichtung nach Anspruch 9, **dadurch gekennzeichnet, dass** das Regulierungsmittel eine unterbrochene Sperre umfasst, welche das obere Ende des Zuführungsdurchlasses (32) bedeckt und das Einlassen von kugelförmigen Elementen (12) in den Zuführungsdurchlass (32) für einen Teil der Drehung des Zuführungskopfes (20) unterbindet.

11. Regulierungsvorrichtung nach Anspruch 10, **dadurch gekennzeichnet, dass** die Sperre durch eine umfangmäßige Schulter gebildet ist, welche benachbart zu der oberen Fläche des radial äußeren Randbereichs des Zuführungskopfes (20) positioniert ist, wobei die Schulter wenigstens eine sich radial nach innen und unten öffnende Aussparung (42) umfasst, wobei in der Aussparung ein kugelförmiges Element (12) aufnehmbar ist.

12. Regulierungsvorrichtung nach Anspruch 11, **dadurch gekennzeichnet, dass** eine Mehrzahl umfangmäßig beabstandeter Aussparungen (42) in der Schulter vorgesehen ist.

13. Regulierungsvorrichtung nach einem der Ansprüche 4 bis einschließlich 6, **dadurch gekennzeichnet, dass** der Zuführungsdurchlass (32) ein oberes Ende (32.1) aufweist, welches sich nach oben in die Zuführungsbahn (34) öffnet, ein unteres Ende (56) aufweist, welches zu dem oberen Ende winkelversetzt ist, und einen Zwischenabschnitt (58) aufweist, der sich zwischen dem oberen und dem unteren Ende erstreckt.

14. Regulierungsvorrichtung nach Anspruch 13, **dadurch gekennzeichnet, dass** das untere Ende (56) zu dem oberen Ende in der Drehrichtung des Zuführungskopfes (20) winkelversetzt ist.

15. Regulierungsvorrichtung nach Anspruch 14, **dadurch gekennzeichnet, dass** sich der Zwischenabschnitt (58) wenigstens über einen Teil seiner Länge umfangmäßig benachbart zu einer radial äußeren Fläche des Zuführungskopfes (20) erstreckt.

16. Regulierungsvorrichtung nach einem der Ansprüche 13 bis 15, **dadurch gekennzeichnet, dass** eine Mehrzahl umfangmäßig beabstandeter Zuführungsdurchlässe (32) vorgesehen ist.

17. Kernkraftwerk, welches ein System zur Handhabung kugelförmiger Elemente umfasst, **dadurch gekennzeichnet, dass** es wenigstens eine Regulierungsvorrichtung (10, 50, 70) nach einem der Ansprüche 4 bis einschließlich 16 umfasst.

## Revendications

1. Procédé de commande du mouvement d'éléments sphériques (12) comprenant les étapes consistant à
alimenter les éléments sphériques (12) dans une trajectoire (34) d'alimentation dirigée vers le bas et
faire tourner une tête (20) d'alimentation dans la trajectoire (34) d'alimentation pour réguler le mouvement des éléments sphériques (12) à travers un passage (32) d'alimentation qui part de la trajectoire (34) d'alimentation **caractérisé en ce que** le procédé comprend également l'étape consistant à réguler avec un moyen (40, 42, 44) de régulation la vitesse à laquelle les éléments sphériques (12) entrent dans le passage (32) d'alimentation.

2. Procédé selon la revendication 1, **caractérisé en ce qu'**il comprend l'alimentation des éléments sphériques (12) à partir d'un contenant (14) dans lequel les éléments sont contenus dans la trajectoire (34) d'alimentation.

3. Procédé selon la revendication 1 ou la revendication 2, **caractérisé en ce que** la régulation de la vitesse à laquelle les éléments sphériques (12) entrent dans le passage (32) d'alimentation comprend permettre aux éléments sphériques (12) d'entrer dans le passage (32) d'alimentation uniquement à une ou plusieurs positions prédéterminées de la tête (20) d'alimentation.

4. Appareil (10) de régulation pour réguler le mouvement des éléments sphériques (12) depuis un emplacement vers un autre, dans lequel l'appareil (10) comprend
un moyen définissant une trajectoire d'alimentation définissant une trajectoire (34) d'alimentation s'étendant vers le bas dans laquelle des éléments sphériques (12) peuvent être reçus ;
au moins un passage (32) d'alimentation partant de la trajectoire (34) d'alimentation ;
une tête (20) d'alimentation montée pour tourner dans la trajectoire (34) d'alimentation pour réguler le flux d'éléments sphériques (12) depuis la trajectoire (34) d'alimentation dans le passage (32) d'alimentation **caractérisé en ce que** l'appareil (10) comprend également
un moyen (40, 42, 44) de régulation pour réguler la vitesse à laquelle les éléments sphériques passent dans le passage d'alimentation.

5. Appareil de régulation selon la revendication 4, **caractérisé en ce que** la trajectoire (34) d'alimentation s'étend vers le bas à partir d'une sortie (16) d'un contenant (14) contenant les éléments sphériques (12).

6. Appareil de régulation selon la revendication 4 ou la revendication 5, **caractérisé en ce que** le passage (32) d'alimentation est dimensionné de façon à permettre le passage d'éléments sphériques (12) en une seule file dans celui-ci.

7. Appareil de régulation selon l'une quelconque des revendications 4 à 6, incluses, **caractérisé en ce que** le passage (32) d'alimentation a une extrémité supérieure (32.1) qui s'ouvre vers le haut depuis la tête (20) d'alimentation.

8. Appareil de régulation selon la revendication 7, **caractérisé en ce que** la tête (20) d'alimentation a une surface supérieure (30) qui est inclinée de façon à alimenter les éléments sphériques (12) dans la trajectoire d'alimentation vers l'extrémité supérieure du passage (32) d'alimentation.

9. Appareil de régulation selon la revendication 8, **caractérisé en ce que** la surface supérieure de la tête (20) d'alimentation se rétrécit vers le haut vers l'intérieur à partir d'un bord radialement à l'extérieur de celle-ci, l'extrémité supérieure du passage (32) d'alimentation s'ouvrant depuis la tête (20) d'alimentation au niveau d'une zone de bord radialement extérieur de celle-ci.

10. Appareil de régulation selon la revendication 9, **caractérisé en ce que** le moyen de régulation comprend une barrière discontinue qui couvre l'extrémité supérieure du passage (32) d'alimentation et empêche l'entrée des éléments sphériques (12) dans le passage (32) d'alimentation pour une partie de la rotation de la tête (20) d'alimentation.

11. Appareil de régulation selon la revendication 10, **caractérisé en ce que** la barrière est formée par un épaulement circonférentiel qui est placé adjacent à la surface supérieure de la zone de bord radialement extérieur de la tête (20) d'alimentation, l'épaulement ayant au moins un évidement (42) ouvert radialement vers l'intérieur et vers le bas, évidement dans lequel un élément sphérique (12) peut être reçu.

12. Appareil de régulation selon la revendication 11, **caractérisé en ce qu'**une pluralité d'évidements (42) espacés circonférentiellement est prévue dans l'épaulement.

13. Appareil de régulation selon l'une quelconque des revendications 4 à 6, incluses, **caractérisé en ce que** le passage (32) d'alimentation a une extrémité supérieure (32.1) qui s'ouvre vers le haut dans la trajectoire (34) d'alimentation, une extrémité inférieure (56) qui est décalée angulairement de l'extrémité supérieure et une partie intermédiaire (58) s'étendant entre les extrémités supérieure et inférieure.

14. Appareil de régulation selon la revendication 13, **caractérisé en ce que** l'extrémité inférieure (56) est décalée angulairement de l'extrémité supérieure dans le sens de rotation de la tête (20) d'alimentation.

15. Appareil de régulation selon la revendication 14, **caractérisé en ce que** la partie intermédiaire (58) s'étend de façon circonférentiellement adjacente à une surface radialement extérieure de la tête (20) d'alimentation pour au moins une partie de sa longueur.

16. Appareil de régulation selon l'une quelconque des revendications 13 à 15, incluses, **caractérisé en ce qu'**une pluralité de passages (32) d'alimentation circonférentiellement espacés est prévue.

17. Centrale nucléaire qui comprend un système de manipulation d'élément sphérique **caractérisé en ce qu'**il comprend au moins un appareil (10, 50, 70) de régulation selon l'une quelconque des revendications 4 à 16, incluses.
